# EUROPEAN PATENT APPLICATION

(11) **EP 0 850 588 A2**
(43) Date of publication of application: **01.07.1998**
(21) Application number: 97120685.9
(22) Date of filing: 26.11.1997
(51) Int. Cl.: A47J 41/00

(54) **Low thermal conductivity gas-filled thermal insulation material**

(30) Priority: 02.12.1996 JP 321944/96
(71) Applicant: NIPPON SANSO CORPORATION, Tokyo 105 (JP)
(72) Inventor: Yamada, Masashi, Minato-ku, Tokyo 105 (JP); Kamachi, Hidefumi, Minato-ku, Tokyo 105 (JP); Fujii, Takafumi, Minato-ku, Tokyo 105 (JP); Furuyama, Kensuke, Minato-ku, Tokyo 105 (JP); Tanaka, Atsuhiko, Minato-ku, Tokyo 105 (JP)
(74) Representative: Munk, Ludwig, Dipl.-Ing.

(57) **Abstract**

A low thermal conductivity gas-filled thermal insulation material, having a double-walled structure with a thermal insulation space layer filled with a low thermal conductivity gas having a thermal conductivity less than that of air provided between an inner wall and an outer wall, wherein the thickness of the thermal insulation space layer is set to be such that the inner wall and the outer wall are capable of achieving contact when a space between the inner wall and the outer wall is made vacuum and an outside of the outer wall is held at atmospheric pressure, within a range of elastic deformation allowing return to an original position. This low thermal conductivity gas-filled thermal insulation material can be economically produced, is compact and lightweight, and is suitable for use with containers having unusual non-cylindrical designs.

## Description

### BACKGROUND OF THE INVENTION

### Field of the Invention

The present invention relates to a low thermal conductivity gas-filled thermal insulation material used for thermally insulated jars, thermally insulated lunchboxes, thermally insulated containers and their lids, and for thermally insulated panels or the like. This application is based on Patent Application No. Hei 8-321944 filed in Japan, the content of which is incorporated herein by reference.

### Description of Related Art

One type of synthetic resin thermally insulated container which has been conventionally proposed has a structure wherein a thermal insulation space layer is formed by filling with a low thermal conductivity gas such as xenon, krypton or argon between the walls of a double-walled container composed of a synthetic resin inner container and outer container.

In order to manufacture this type of synthetic resin thermally insulated container, the air present inside the space between the walls of the double-walled container is exhausted by means of a vacuum pump or the like through a gas-filling hole provided in a portion of the thermally insulated container, the low thermal conductivity gas is loaded through the gas-filling hole, then the gas-filling hole is sealed. During the vacuum exhaustion, atmospheric pressure is applied to the walls, which are squeezed toward the space. Consequently, if the wall materials are too weak, the container can collapse and become damaged. Therefore, the materials of double-walled containers are often reinforced by making them thick, giving them a curved shape or providing reinforcement ribs in order to gain sufficient strength to withstand the application of atmospheric pressure. Such measures require particular consideration in the case of non-cylindrical or non-spherical bodies such as angular bodies, planar bodies or elliptical bodies, because such shapes cause the inner container and outer container forming the product to have insufficient strength in the direction perpendicular to the surface.

However, these types of conceptual measures, when put into practice, result in loss of product value by reducing the compactness and increasing the weight of thermally insulated containers, and also by increasing manufacturing costs including materials costs. This does not depend on the shapes of the containers, and the same applies to panel-shaped thermally insulated panels, as well as to cases wherein metallic materials are used for the thermally insulated containers.

### SUMMARY OF THE INVENTION

The present invention has been made in consideration of the above-mentioned conditions, and has the object of offering an economical, compact and lightweight low thermal conductivity gas-filled thermal insulation material which is capable of being used in non-cylindrical containers having unusual designs.

The present invention offers a low thermal conductivity gas-filled thermal insulation material, having a double-walled structure with a thermal insulation space layer filled with a low thermal conductivity gas having a thermal conductivity less than that of air provided between an inner wall and an outer wall, wherein the thickness of the thermal insulation space layer is set to be such that the inner wall and the outer wall are capable of achieving contact when a space between the inner wall and the outer wall is made vacuum and the outside of the outer wall is held at atmospheric pressure, within a range of elastic deformation allowing return to an original position.

The low thermal conductivity gas-filled thermal insulation material according to the present invention may be such that at least one of the inner wall and the outer wall is provided with a joint protection portion which separates when an inside pressure of the thermal insulation space layer is approximately equivalent to atmospheric pressure.

The low thermal conductivity gas-filled thermal insulation material according to the present invention may be such that the joint protection portion is formed near a joint portion on at least one of the inner wall and the outer wall.

The low thermal conductivity gas-filled thermal insulation material according to the present invention may be such that the inner wall and the outer wall are formed from one or a mixture of two or more resin materials chosen from the group consisting of polyethylenes, polypropylenes, polycarbonates, polystyrenes, ABSs, polyesters, polyamides, polyimides, polyketones, polyethylene vinyl alcohols, polyvinyl alcohols and polysulfones.

The low thermal conductivity gas-filled thermal insulation material according to the present invention may be such that the inner wall is an inner container in the shape of a cylinder having a bottom, the outer wall is an outer container in the shape of a cylinder having a bottom which is larger than the inner container, and the thermal insulation material is a double-walled container formed by joining and integrating the inner and outer containers at mouth portions thereof.

The low thermal conductivity gas-filled thermal insulation material according to the present invention may be provided with a sealing structure wherein an exhaust hole is formed in a bottom portion of the outer container and a sealing plate is attached around the periphery of the exhaust hole.

The low thermal conductivity gas-filled thermal insulation material as described above offers the following effects.

The manufacturing costs can be held low because the present invention does not require the use of any special apparatus for eliminating pressure differences when filling with low thermal conductivity gas.

The present invention can be made lightweight and compact because elastic deformation of the wall materials is permitted, thereby allowing the inner and outer wall materials to be made thinner.

Flat or angular shapes are possible, thereby increasing the compactness of the material and diversifying the variation of possible products.

By forming a joint protection portion for protecting the joint portion, the elastic deformation stress of the wall portions can be prevented from being applied to the joint portion during vacuum exhaustion of the air between the inner and outer walls, thereby reducing defects due to damage of the mouth portion during vacuum exhaustion.

By providing this joint protection portion on the mouth portion of at least one of the inner wall and the outer wall, the joint protection portion can be used to position a lid when applied to a thermally insulated container. Furthermore, since this type of structure allows the fitting length of the container and the lid to be increased, the thermal conduction loss at those portions can be reduced, thereby improving the thermally insulating performance capability.

Additionally, the joint protection portion can be used as a positioning aid when joining the mouth portions of the inner and outer walls, thereby allowing the inner and outer walls to be easily and precisely joined.

Since the inner and outer walls are not in contact after filling with low thermal conductivity gas, the thermal insulation capabilities are not degraded.

### BRIEF DESCRIPTION OF THE DRAWINGS

Fig. 1 is a partial cross-section front view showing an embodiment of a low thermal conductivity gas-filled thermal insulation material according to the present invention.

Fig. 2 is a partial cross-section side view of the same thermal insulation material.

Fig. 3 is an enlarged section view of an essential portion of the same thermal insulation material.

Fig. 4 is a sectional view for explaining the actions of the walls of the same thermal insulation material during vacuum exhaustion.

### DESCRIPTION OF PREFERRED EMBODIMENTS OF THE INVENTION

The thermal insulation material of the present invention is composed of metallic materials, synthetic resin materials and the like, and has a double-walled structure with a space portion. A low thermal conductivity gas having a thermal conductivity less than that of air is filled into this space portion to form a thermal insulation space layer. Additionally, the low thermal conductivity gas-filled thermal insulation material of the present invention has the feature that the inner wall and outer wall elastically deform within a returnable range and make contact when the space between the inner wall and the outer wall is made vacuum and the outside of the outer wall is held at atmospheric pressure.

This design allows the deformation of the inner and outer walls due to the atmospheric pressure *P* when the atmospheric pressure causes a pressure difference of 1 kg/cm² between the inside and outside of the thermal insulation layer during evacuation of air to be held to a range of returnable elastic deformation by making the inner and outer walls contact each other before they deform to such a degree that it is not possible to return to the original shape.

By setting the thickness of the thermal insulation space layer in this way, it is possible to prevent collapse and breakage during vacuum exhaustion. Additionally, since the pressure difference between the thermal insulation space layer and the outside air is eliminated once the low thermal conductivity gas is filled, the inner and outer wall surfaces which had been in contact return to their original positions as they were prior to vacuum exhaustion, so that the product can be manufactured without being damaged.

In this case, the filling pressure of the should preferably be approximately equal to atmospheric pressure at room temperature (20-30 °C).

With regard to the external temperature conditions under which a thermal insulation material manufactured in this manner would normally be used, while a minimum temperature of -30 °C during the winter in cold regions and a maximum temperature of 80 °C inside automobiles during the summer can be expected, the pressure variation inside the thermal insulation space in such cases would be 0.8-1.2 kg/cm², according to Boyle-Charles' Law. Therefore, the overall pressure variation which can be expected is approximately ±0.2 kg/cm², which is considerably less than the pressure difference of 1 kg/cm² during vacuum exhaustion, thus allowing a product which is sufficient to withstand general applications to be manufactured.

Furthermore, it should be noted that when this thermal insulation material is composed of a synthetic resin material, the joint portions such as around the mouth are bonded with adhesive or fused when the double-walled containers and the like are manufactured, inevitably reducing the strength of the joint portion from the original material strength upon actual application. Therefore, the present invention employs a structure wherein a step for the surfaces to achieve contact is provided between the joint portion and the elastic deformation portion so that shear stress is not applied to the joint portion during elastic deformation of the double wall surfaces upon vacuum exhaustion. That is, in the present invention, a joint protection portion which separates when the pressure inside the thermal insulation space layer is approximately equal to atmospheric pressure is provided at at least one of the inner wall or the outer wall.

By making the clearance of the joint protection portion as small as possible, the shear stress at the joint portion is minimized and the reinforcement effect is increased. Additionally, when the present invention is applied to a thermally insulated container, by forming a joint protection portion in this manner, since the joint protection portion is formed in the vicinity of the joint portion around the mouth of the thermally insulated container, it is extremely convenient for receiving a lid which may cover the mouth of the container when the mouth portion of the inner container is enlarged or the mouth portion of the outer container is reduced near the joint portion, and it can also improve the tightness of the seal provided by the lid by increasing the length of fitting with the lid, thereby increasing the thermal insulation ability of the thermally insulated container. Furthermore, by enlarging the mouth portion of the inner container or reducing the mouth portion of the outer container, it can also act as a positioning aid when bonding or fusing together the mouth portions of the inner and outer containers. Although it is also possible to bond or fuse a joint protection portion to the other side in order to further increase the joint strength, this results in difficulties upon production process and causes increases in the manufacturing costs.

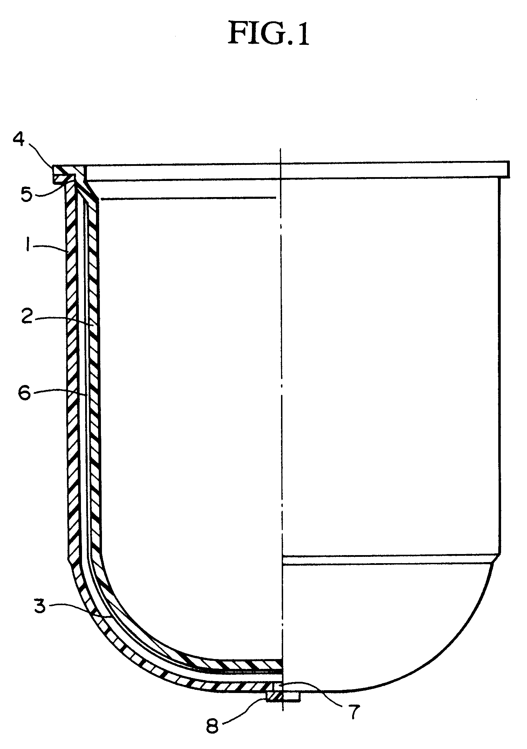

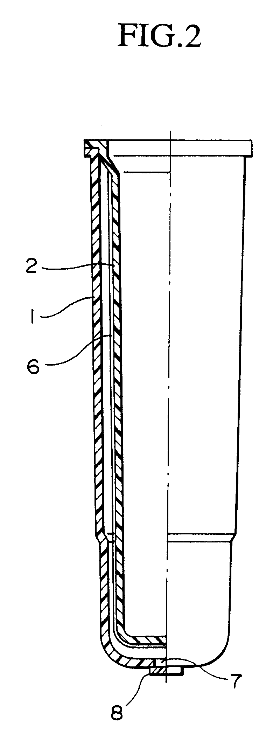

Figs. 1 through 4 show a thin thermally insulated container as an embodiment of a low thermal conductivity gas-filled thermal insulation material according to the present invention. As shown in Figs. 1 and 2, this thermally insulated container 1 comprises a double-walled container formed by adjoining an inner container 2 composed of a synthetic resin formed into the shape of a cylinder having a bottom, and an outer container 1 having somewhat larger dimensions at their mouth portions, with a space provided between containers 1 and 2. A thermal insulation space layer 3 is formed by filling the space between the containers 1 and 2 with a gas having lower thermal conductivity than air, preferably a low thermal conductivity gas of at least one type chosen from among the group consisting of xenon, krypton and argon.

Additionally, a radiation prevention material 6 composed of a metallic foil or a metallic plating layer is provided on the outer surface of the inner container 2 in order to prevent heat radiation. This heat radiation preventing material 6 can be formed either on the outer surface of the inner container 2, or on both the outer surface of the inner container 2 and the inner surface of the outer container 1.

An exhaust hole 7 is provided on the bottom portion of the outer container 1, and this exhaust hole 7 is sealed by attaching a sealing plate 8 composed of a synthetic resin material identical to that of the outer container 1 around this exhaust hole 7 by bonding with adhesive or by fusion.

While there are no restrictions with regard to the material of the outer container 1, inner container 2 and the sealing plate 8, they can be favorably manufactured by using one or a mixture of two or more resin materials chosen from the group consisting of polyethylenes, polypropylenes, polycarbonates, polystyrenes, ABSs, polyesters, polyamides, polyimides, polyketones, polyethylene vinyl alcohols, polyvinyl alcohols and polysulfones.

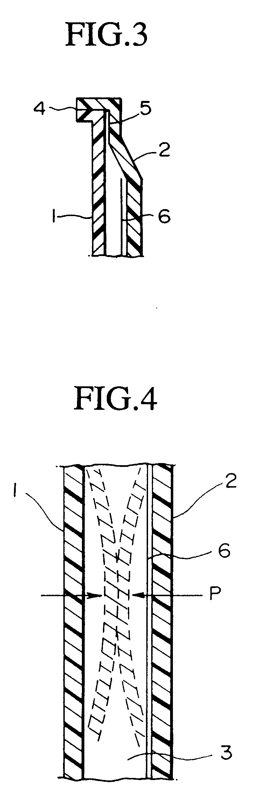

As shown in Fig. 4, a feature of this thermally insulated container is that the thickness of the thermal insulation space layer 3 is set such that the inner container 2 and the outer container 1 make contact by elastic deformation within a range allowing for return to the original position, when the space between the inner container 2 and the outer container 1 is made vacuum and the outside of the outer container 1 is held at atmospheric pressure. More specifically, the thickness of the thermal insulation space layer 3 should preferably be approximately 2-7 mm. When the thickness of the thermal insulation space layer 3 exceeds 7 mm, the conditions are not favorable because it becomes difficult to achieve contact between the inner container 2 and the outer container 1 within a range of elastic deformation allowing for return to the original position, and heat conduction can occur due to convection formed in the filled low thermal conductivity gas. Additionally, if the thickness of the thermal insulation space layer 3 is less than 2 mm, the inner container 2 and outer container 1 can easily make contact when the inside pressure of the thermal insulation space layer 3 becomes lower than atmospheric pressure due to sudden increases in the outside temperature.

Another feature of this thermally insulated container is that a joint protection portion 5 which separates when the pressure inside the thermal insulation space layer is approximately equal to atmospheric pressure is formed on at least one of either the inner container 2 or the outer container 1. As shown in Fig. 3, the clearance between the outer surface of the inner container 2 and the inner surface of the outer container 1 at the joint protection portion 5 is 0.1-1.0 mm, preferably 0.1-0.5 mm, and the joint protection portion has a vertical height of approximately 5 mm.

In the present embodiment a joint protection portion 5 is formed on the inner container 2 by forming a flange portion in the radially outward direction from the upper end of the mouth portion, then forming an enlarged diameter portion which approaches the inner wall of the outer container 1 directly underneath. This enlarged diameter portion is the joint protection portion 5. Alternatively, the structure may also be such that the joint protection portion 5 is formed on the outer container 1 by forming a reduced diameter portion at the upper end which approaches the outer wall of the inner container 2.

When the mouth portions of the inner container 2 and the outer container 1 are bonded by adhesives or fused to join them in an airtight manner, and the space between the inner and outer containers is vacuum exhausted through an exhaust hole provided on the bottom of the double-walled container, the atmospheric pressure *P* is applied to the containers 1 and 2 so that the containers 1 and 2 will elastically deform and make contact as shown in Fig. 4. At this time, the clearance at the joint protection portion 5 allows the joint protection portion 5 to maintain a state of almost touching the opposing surface (the inner wall of the outer container), thereby preventing the deformation stress of the containers from directly acting on the joint portion 4 and providing protection for the joint portion 4.

The joint portion 4 at the mouths of the containers 1 and 2 are joined in an airtight seal by means of bonding with an epoxy adhesive agent or the like, or by thermal fusion such as vibration fusion.

The active effects offered by the above-described features when manufacturing this thermally insulated container shall be explained. First, an inner container 2 and an outer container 1 are manufactured using a desired synthetic resin material by means of a molding method such as injection molding. Additionally, a sealing plate 8 composed of a synthetic resin is separately prepared. Here, a flange portion and an enlarged diameter portion directly underneath such as shown in Fig. 3 are formed at the mouth portion at the upper part of the inner container 2. That is, a joint protection portion 5 is formed. Additionally, an exhaust hole 7 is formed at the bottom of the outer container 1.

Next, a heat radiation preventing material 6 composed of aluminum foil or the like is provided on the outer surface of the inner container 2. When using a metallic foil is used as the heat radiation preventing material, the metallic foil can be adhered to the outer surface of the inner container 2 by using adhesive agents or double-sided tape.

Next, the inner container 2 to which the heat radiation preventing material 6 has been attached is inserted into the outer container 1. Then, the flange portions respectively formed on their mouth portions are aligned, and the flange portions of the outer container 1 and the inner container 2 are attached by means of adhesive agents or by fusion, thus forming a double-walled container wherein the containers 1 and 2 are joined and integrated with a space therebetween. When forming this joint portion 4, positioning of the inner container 2 can be performed easily and accurately by means of the joint protection portion 5 provided on the mouth portion of the inner container 2.

Next, a gas exchange apparatus which is not shown in the drawings is attached to the bottom of the double-walled container, and the space between the containers 1 and 2 is vacuum exhausted, the space is filled with a low thermal conductivity gas such as xenon to approximately atmospheric pressure. This gas exchange apparatus may be any of various types of apparatus having a vacuum exhaustion system connected to a vacuum pump and a gas supply system connected to a gas cylinder containing low thermal conductivity gas such as xenon, which is capable of switching between the systems to first perform vacuum exhaustion of the space between the containers 1 and 2 through the exhaust hole 7 of the double-walled container, then supply the space with low thermal conductivity gas.

During vacuum exhaustion of the space between the containers 1 and 2, the inner and outer containers 1 and 2 of the double-walled container are elastically deformed by the atmospheric pressure *P* to make contact as shown in Fig. 4. Since the deformation of the inner and outer containers 1 and 2 is restricted to the range of elastic deformation, the inner and outer containers 1 and 2 are restored from displacement to their original positions without the occurrence of cracks or permanent deformation upon the space returning to atmospheric pressure. Additionally, since a clearance of 0.1-1.0 mm, preferably 0.1-0.5 mm, is provided between the inner surface of the outer container 1 and the outer surface of the inner container 2 at the joint protection portion 5, the joint protection portion 5 provided directly underneath the joint portion 4 on the inner container 2 will maintain a state of almost touching the inner wall at the mouth portion of the outer container 1, so that the deformation stress of the inner and outer containers 1 and 2 will not reach the joint portion 4. As a result, breakage of the joint portion 4 and defects which can result in loss of the airtight seal can be reduced.

Next, a low thermal conductivity gas such as xenon is supplied to the space between the inner and outer containers 1 and 2 which has been vacuum exhausted by the gas exchange apparatus. The filling pressure of the gas is approximately atmospheric pressure. Supplying this low thermal conductivity gas causes the wall portions of the inner and outer containers 1 and 2 which had been in contact due to the, atmospheric pressure *P* to separate and return to their original positions.

Next, the sealing plate 8 is bonded or fused to the periphery of the exhaust hole 7 at the bottom of the outer container 1 to seal the exhaust hole 7.

Due to the above procedures, a thermally insulated container such as shown in Figs. 1 and 2 can be manufactured.

While the above embodiment is an example wherein an inner container 2 and an outer container 1 shaped into cylinders having bottoms are joined at their mouths with a space therebetween to form an integrated thermally insulated container, the present invention is not restricted such applications, and can be applied to various types of thermal insulation materials for thermally insulated panels, thermally insulated lids having double-walled structures and the like.

Additionally, the materials composing the inner container 2 and the outer container 1 are not restricted to synthetic resins, and one or both of the inner and outer containers may be composed of metallic materials such as stainless steel, or may be constructed from metal-laminated panels.

Furthermore, while the containers are sealed by providing an exhaust hole 7 in the bottom of the outer container 1 and sealing the periphery with a sealing plate 8 the exhaust hole 7 may alternatively be sealed by plugging the exhaust hole 7 with adhesive agent and allowing the adhesive agent to harden. Additionally, in the case of a metallic thermally insulated container, it is possible to use conventional sealing methods such as tip pipe formats or brazing metals.

### Examples

A thermally insulated container such as shown in Fig. 1 was manufactured. The outer container 1 and the inner container 2 were formed by injection molding using a mixed resin of polycarbonate and polyethylene terephthalate. The representative thickness was set at 2.5 mm and the thickness of the thermal insulation space layer was set at 5 mm. Next, the outer container 1 and the inner container 2 were joined at the joint portions at their mouths by means of epoxy adhesive agent. Here, it should be noted that the mouth portion of the inner container 2 was given a designated stepped structure in order to form a joint protection portion 5 between the mouth joint portion 4 and the thermal insulation space layer 3 (elastic deformation portion) having a length of 5 mm and with a clearance between surfaces in the direction perpendicular to the elastic deformation direction of 0.1-0.3 mm. This also performed the function of positioning during adhesive attachment. Additionally, the outer surface of the inner container 2 was lined with aluminum foil 6 by using double-sided tape in order to prevent heat radiation.

In order to fill the thermal insulation space layer 3 of the thin thermally insulated container manufactured in this manner with xenon, which is a low thermal conductivity gas, vacuum exhaustion was performed through the exhaust hole 7 provided in the bottom of the outer container 1 by using a gas exchange-filling apparatus. At that time, the atmospheric pressure *P* caused the outer container 1 and the inner container 2 to deform into the thermal insulation space layer 3 and make contact at approximately the center of the flat portion. Then, upon filling with xenon gas at room temperature to atmospheric pressure, the thermal insulation space layer returned to the original thickness of 5.0 mm, and no damage occurred. Finally, the exhaust hole 7 was sealed with the sealing plate 8 by using a cyanoacrylate adhesive agent to complete the thermally insulated container.

In accordance with the above-described method for manufacturing a thermally insulated container, various types of test products were produced while changing the conditions with regard to the thickness of the thermal insulation space layer and the presence or absence of a joint protection portion near the mouth portion of the inner container 2.
- Test Product 1:: Thickness of Thermal Insulation Space layer: 3 mm
Joint Protection Portion present
- Flat Portion:: no damage
- Mouth Portion:: no damage
- Test Product 2:: Thickness of Thermal Insulation Space layer: 3 mm
Joint Protection Portion absent
- Flat Portion:: no damage
- Mouth Portion:: no damage
- Test Product 3:: Thickness of Thermal Insulation Space layer: 7 mm
Joint Protection Portion present
- Flat Portion:: no damage
- Mouth Portion:: no damage
- Test Product 4:: Thickness of Thermal Insulation Space layer: 7 mm
Joint Protection Portion absent
- Flat Portion:: no damage
- Mouth Portion:: cracking occurred
- Test Product 5:: Thickness of Thermal Insulation Space layer: 10 mm
Joint Protection Portion present
- Flat Portion:: deformation, whitening
- Mouth Portion:: no damage
- Test Product 6:: Thickness of Thermal Insulation Space layer: 10 mm
Joint Protection Portion absent
- Flat Portion:: deformation, whitening
- Mouth Portion:: cracking occurred

## Claims

1. A low thermal conductivity gas-filled thermal insulation material, having a double-walled structure with a thermal insulation space layer filled with a low thermal conductivity gas having a thermal conductivity less than that of air provided between an inner wall and an outer wall, wherein the thickness of said thermal insulation space layer is set to be such that said inner wall and said outer wall are capable of achieving contact when a space between said inner wall and said outer wall is made vacuum and an outside of said outer wall is held at atmospheric pressure, within a range of elastic deformation allowing return to an original position.

2. A low thermal conductivity gas-filled thermal insulation material in accordance with claim 1, at least one of said inner wall and said outer wall is provided with a joint protection portion which separates when an inside pressure of said thermal insulation space layer is approximately equivalent to atmospheric pressure.

3. A low thermal conductivity gas-filled thermal insulation material in accordance with claim 2, wherein said joint protection portion is formed near a joint portion on at least one of said inner wall and said outer wall.

4. A low thermal conductivity gas-filled thermal insulation material in accordance with claim 1, wherein said inner wall and said outer wall are formed from one or a mixture of two or more resin materials chosen from the group consisting of polyethylenes, polypropylenes, polycarbonates, polystyrenes, ABSs, polyesters, polyamides, polyimides, polyketones, polyethylene vinyl alcohols, polyvinyl alcohols and polysulfones.

5. A low thermal conductivity gas-filled thermal insulation material in accordance with claim 1, wherein said inner wall is an inner container in the shape of a cylinder having a bottom, said outer wall is an outer container in the shape of a cylinder having a bottom which is larger than said inner container, and said thermal insulation material is a double-walled container formed by joining and integrating the inner and outer containers at mouth portions thereof.

6. A low thermal conductivity gas-filled thermal insulation material in accordance with claim 5, provided with a sealing structure wherein an exhaust hole is formed in a bottom portion of said outer container and a sealing plate is attached around the periphery of said exhaust hole.
